# EUROPEAN PATENT SPECIFICATION

(11) **EP 0 449 634 B1**
(45) Date of publication and mention of the grant of the patent: **16.07.1997**
(21) Application number: 91302752.0
(22) Date of filing: 28.03.1991
(51) Int. Cl.: G06K 7/10

(54) **Omnidirectional bar code reader**
Streifenkodeleser für alle Richtungen
Lecteur de code à barres omnidirectionnel

(30) Priority: 28.03.1990 US 500802
(43) Date of publication of application: 02.10.1991
(73) Proprietor: OMNIPLANAR, INC., Princeton, New Jersey 08543 (US)
(72) Inventor: Chandler, Donald G., Princeton, New Jersey 08540 (US); Batterman, Eric P., Flemington, New Jersey 08822 (US)
(74) Representative: Allam, Peter Clerk

(56) References cited:
- EP-A- 0 350 933
- EP-A- 0 353 842
- A. PELED et al.: "Digital Signal Processing", 1976, pages 77-88, John Wiley & Sons, New York, US

## Description

This invention relates to the field of machine readable symbols, and particularly to a method and apparatus for reading of bar code symbols.

Various machine readable symbols have been developed for many applications. For example, the Universal Product Code (UPC) is a bar code symbology widely used in the U.S. retail industry to identify products at the point of sale, or for inventory control purposes. In the industrial area, other bar code symbologies have been used for package identification systems. Common bar code symbologies include CODABAR, code 39, interleaved 2 of 5, and code 49. In general, machine readable codes provide significant advantages in the efficiency of material handling and data gathering.

A bar code is a particular type of machine readable symbol. A typical bar code includes parallel solid lines, or bars, of varying width and spacing. The alternating light and dark areas defined by the bars and the spaces between the bars, represent a digital code which serves to identify the content of the bar code symbol. After being read, the digital code is then directly translated to a sequence of alphanumeric characters and then by means of a data base, may be further translated to the common language description of the item bearing the subject bar code label, along with other pertinent data, such as for example the current price of the item.

A bar code may be read by scanning. Typically, a small spot of light is directed from a source of illumination to the surface of the bar code. The reflected light is sensed by a photosensitive element. The small illuminated spot of light is then swept across the bar code surface, all the while sensing the intensity of the resulting reflected light. Since light areas reflect more light than dark areas, the reflected light intensity represents the digital code which serves to identify the content of the bar code symbol.

In one type of bar code reader, a hand held laser or LED is used as the source of illumination, and the reader is manually swept across the bar code surface. In a scanning type of bar code reader, the light source is stationary while the light beam is moved in a scanning pattern. A typical scan pattern may be a linear bidirectional sweep. In the latter type of scanner, the bar code symbol and the bar code reader must still be manually oriented so that the scan pattern traverses all the bars of the bar code in order for the bar code to be properly scanned and read.

In another type of bar code scanner, a laser beam is swept through a complex series of repetitive geometric patterns in order to provide for some degree of omnidirectional scanning. All omnidirectional laser based scanners tend to be expensive due to the initial cost and limited lifetime of the laser light source, and the associated complex optical elements which typically include rapidly rotating polygonal mirrors. Also, laser based scanners use an intense concentrated light source which can be an eye hazard, and which requires special precautions in manufacturing and use.

Finally, omnidirectional laser scanners tend to perform poorly with bar code symbols which have been damaged by abrasion, dirt, printing defects, and the like. This latter limitation is caused by scan patterns which are likely to sweep through the bar code label only once as it passes under the scanner. If the laser sweep cuts through a damaged area of the bar code label, a misread (or no read) will occur. Additionally, omnidirectional laser scanners do not read low aspect ratio bar codes because of the limited number of scanning angles in the scan pattern. Also, omnidirectional laser scanners cannot read stacked bar codes such as code 49.

In another type of bar code reader, an image of a bar code is formed over a one dimensional array of photosensitive elements. The one line photosensitive array is subsequently serially read out to simulate a scan line through the bar code. In yet another type of bar code reader, two dimensional image of a bar code is formed on a two dimensional array of photosensitive elements, and subsequently stored in a memory for further processing. However, in such prior art bar code readers, it has still been necessary to position and orient the bar code to the reader.

In general, in the prior art, it is typically necessary for the operator to either orient the bar code, or otherwise position the bar code and/or the reader manually in order to achieve proper operation. Also, prior art bar code readers have difficulty reading damaged labels, and stacked or multiple bar codes. The common result of these limitations, is misread bar codes or unread bar codes, even after repeated attempts. If unable to successfully scan the bar code, the data must be read and entered manually. In some cases, the bar code symbol will pass the scanning station completely undetected and unread. In any event, due to the limitations of the prior art bar code readers, the benefits of marking products with machine readable symbols is reduced or lost.

Published European Patent Application EP-A-0350933 discloses a method for reading a bar code. The method disclosed comprises capturing and storing two dimensional image containing an image of a bar code anywhere within the two dimensional image. The image is stored as bi-level values derived from the input data. The stored image is processed to locate the bar code image. The bar code image is detected as a black "skeleton" against a white background using boundary line detection processing. The elongation of the skeleton region is used to determine the scanning direction for reading or decoding the bar code image.

The present invention is embodied in a bar code reader in which bar codes are rapidly and reliably read. Furthermore, a bar code reader in accordance with the present invention provides for high speed omnidirectional reading of multiple or stacked bar code symbols, or even damaged bar code labels, which may be at a random orientation, distance and relative motion with respect to the reader.

The embodiment of the bar code reader in accordance with the present invention described below includes 1) means for capturing and storing a two dimensional image in memory storage, which stored image includes a bar code symbol somewhere within the field of view, 2) detecting means for processing the stored image for detecting a potential location, or locations, anywhere within the field of view of the stored image, each of which locations being likely to contain a bar code symbol, 3) orientation processing means for determining the orientation of said detected bar code symbol at said detected location likely to contain a bar code symbol, 4) filtering means for filtering said detected bar code symbol in a direction perpendicular to said determined orientation of said detected bar code symbol in order to utilize the redundancy of the bar code symbology, and 5) means for scanning through said detected bar code symbol at a location corresponding to said detected potential location and at an angle substantially corresponding to said determined orientation of said detected bar code symbol.

It is noted that various combinations of the above five elements, i.e. image capture, detection of likely bar code location, determination of bar code orientation, bar code filtering, and bar code scanning, may be totally or partially combined into composite operations. For example, the detection of likely bar code locations and the coarse determination of bar code orientation may be performed at the same time. Bar code fine orientation and filtering may be performed in a composite operation as well. Moreover, bar code filtering and bar code scanning may be performed in a combined processing step.

It is further noted that although four of the above identified elements. i.e. bar code image capture, location, orientation and scan are operations needed for omnidirectional bar code reading, bar code filtering is optional. For example, in some applications it may be sufficient to rely on one or more successful scans once the bar code symbol is located and properly oriented.

However, it is desirable that the total image processing be divided into at least two phases, in which the first processing phase permits a large amount of image area to be processed in a short amount of time, and in which the second processing phase is relatively more intensive and more concentrated. During the first processing phase, some areas of the stored image may be identified as likely to contain a bar code symbol. In such case, the second processing phase operates only on those portions of stored image which have been identified as likely to contain a bar code. Although the second processing phase involves more intensive processing, relatively smaller image area is needed to be processed during the second processing phase due to the selective identification of the image areas likely to contain bar codes during the first processing phase.

The present invention is particularly concerned with the locating of bar code image within a captured two dimensional image, and in its broadest aspects the orientation provides a method for reading a bar code as set forth in Claim 1 and a bar code reader as set forth in Claim 12.

The method and apparatus of the present invention will be further described with reference to the embodiment illustrated in the accompanying drawings in which:
Figure 1 is a block diagram, partially in flow chart form, indicating a method and apparatus in accordance with the present invention;
Figure 2 is a block diagram of a system for a bar code reader in accordance with the present invention;
Figure 3 is a graphical representation of a two dimensional image area illustrating individual cells used in determining location and orientation of a bar code symbol;
Figure 3A is a representation of a portion of the image area of figure 3, which portion contains a bar code symbol;
Figure 4 is a flow chart illustrating the control program for the ASIC controller of figure 2;
Figures 5A and 5B show a flow chart illustrating the control program for the digital signal processor of figure 2;
Figure 6A is a representation of a bar code symbol with two typical parallel scan lines, which may be utilized in conjunction with the embodiments of the present invention;
Figure 6B illustrates the reflectance signals from the two parallel scan lines of figure 6A;
Figure 6C represents the signal differences between successive data points along each of the two respective scan lines of figure 6B;
Figure 6D illustrates the products of the signal differences for each of the respective data points for the signal differences shown in figure 6C, and the sum total of all products of the signal differences along two parallel scan lines; utilized in conjunction with the present invention;
Figure 7A is a representation of a black to white transition with two typical parallel scan lines, which may be distinguished from a bar code symbol in conjunction with the present invention;
Figure 7B illustrates the reflectance signals from the two parallel scan lines of figure 7A;
Figure 7C represents the signal differences between successive data points along each of the two respective scan lines of figure 7B;
Figure 7D illustrates the products of the signal differences for each of the respective data points for the signal differences shown in figure 7C, and the sum total of all products of the signal differences along two parallel scan lines;
Figure 8A is an image of a bar code symbol at an angle to the direction of scan with a portion of the scanned area indicated.
Figure 8B illustrates the reflectance signal from one scan line of the scanned area indicated in figure 8A.
Figure 8C illustrates the scan line of figure 8B after processing by interpolation.
Figure 8D shows one interpolated scan line and another interpolated scan line, four scan lines apart.
Figure 8E shows eight interpolated scan lines which have been shifted respectively into alignment;
Figure 8F shows the average of the eight interpolated and shifted scan lines of figure 8E;
Figure 8G is a binary signal representation of the waveform of figure 8F using the overall signal average as the binary threshold value;
Figure 9A is the cross-correlation function of the interpolated first and second scan lines of the portion of the scanned area in figure 8A;
Figure 9B is a family of cross-correlation curves, each resulting from cross-correlating the first interpolated scan line with successive interpolated scan lines of the portion of the scanned area in figure 8A;
Figure 9C shows the peak values of the cross-correlation function for each interpolated scan line compared to the first interpolated scan line for the portion of the scanned area indicated in figure 8A; and
Figure 10 is an illustration of a bar code symbol, depicting the manner in which overlapping partial scans are concatenated to form a complete scan.

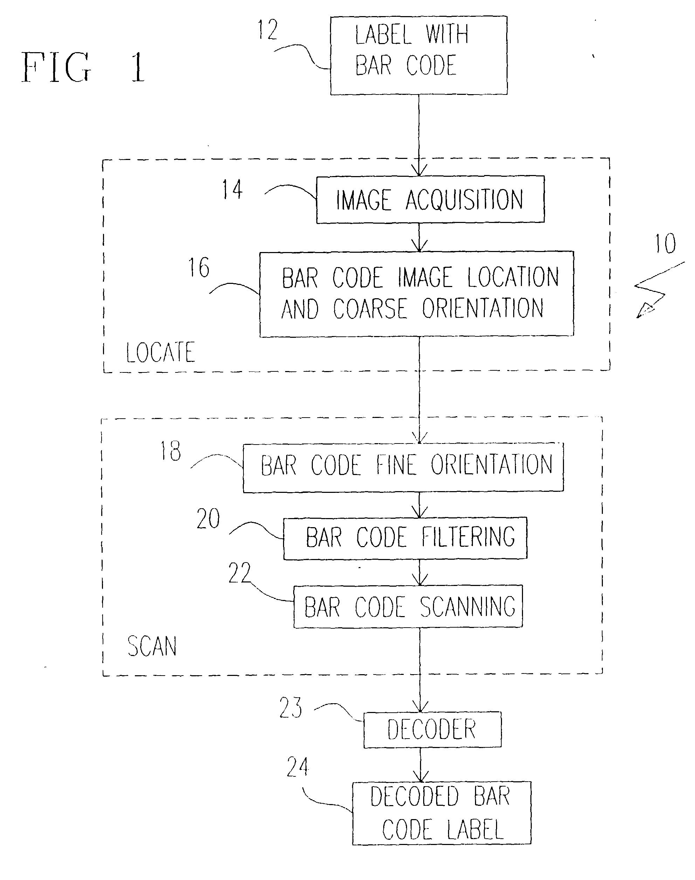

A brief overview of a bar code reader in accordance with the present invention is shown in figure 1. An image acquisition system 14 which includes the necessary optical and photosensitive elements, captures an image of the reader's field of view, which captured image may contain a bar code label 12.

Once the image is acquired in memory, means are provided for bar code image location and coarse orientation 16. Together, image acquisition 14 and bar code image location and orientation 16 comprise the portion of the present bar code reader which serves to generally locate a bar code within a field of view.

After the bar code image is located within the field of view and its coarse orientation determined, means 18 are provided for determining the fine orientation of the bar code. Having located the bar code and determining its fine orientation, means 20 for filtering the bar code, are provided. Thereafter, bar code scanning 22 is performed. The operation of determining the fine orientation 18, bar code filtering 20, and bar code scanning 22, together comprise the portion of the present bar code reader which serves to "scan" a bar code once having been located within a field of view. After bar code scanning, a decoder 23 well known to those skilled in the art, provides the decoded bar code label output 24.

The operation of "scanning a bar code", as used in the prior art, relates to sweeping an illuminated spot across a bar code. As used herein, with respect to the present invention, the operation of "scanning a bar code" means to extract from image memory storage, sequential values derived from said image memory storage corresponding to reflectivities along a sweep traversing the bar code.

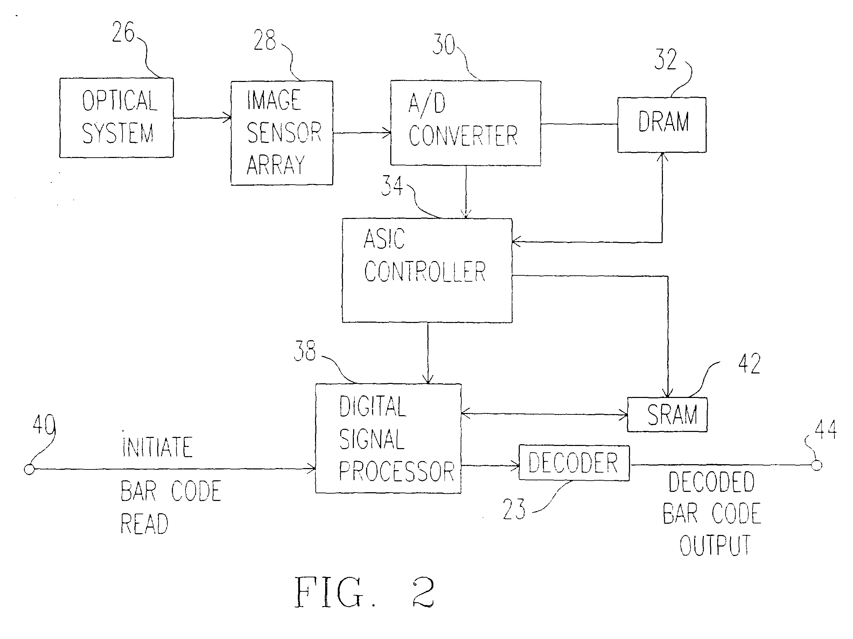

A preferred hardware embodiment of the present invention is shown in figure 2. An optical system 26 is coupled to an image sensor array 28. The output of the image sensor array 28 is converted from analog to digital in A/D converter 30, and stored in a first memory 32. The first memory 32 is preferably a dynamic random access memory (DRAM). A controller 34 which may be an application specific integrated circuit (ASIC) controls the image acquisition system so as to capture and digitize an image and store it in DRAM 32. The ASIC controller 34 also performs several other processing tasks under the control of a digital signal processor 38. Digital signal processor 38 is typically a high speed microprocessor such as the ADSP-2101 available from Analog Devices, Norwood, Mass. The memory space for digital signal processor 38 is both ROM for program storage, and static random access memory 42 (SRAM) for image processing storage. Portions of the stored image memory in DRAM 32 are transferable to SRAM 42 under the control of ASIC controller 34. Finally, an input terminal 40 is coupled to the input of digital signal processor 38, and an output terminal 44 is coupled to a decoder 23, which is coupled to the output of digital signal processor 38.

In operation, a bar code read is initiated by an input signal on terminal 40 to digital signal processor 38. Responsive to the control outputs of digital signal processor 38, ASIC controller 34 acquires an image for storage in DRAM memory 32. Also responsive to the control outputs of digital signal processor 38, ASIC controller 34 processes the stored image in DRAM 32 so as to determine the potential location or locations which are likely to contain a bar code symbol. For location processing, the image stored in DRAM 32 is divided into smaller areas, or cells, and a location score is assigned to each cell. The higher the location score for a given cell, the more likely is the cell to contain at least a partial bar code symbol.

When the ASIC controller 34 has completed its location scoring task, digital signal processor 38 examines the resulting scores and commands the ASIC controller 34 to transfer those image areas of interest from DRAM 32 to SRAM 42. Digital signal processor 38 thereafter processes the partial image in SRAM 42 to determine the orientation of the stored bar code image, to filter the oriented bar code image along a direction perpendicular to the determined orientation, and to scan the oriented and filtered bar code image. After all areas of interest have been transferred from DRAM 32 to SRAM 42 and processed by digital signal processor 38, a complete bar code output scan is provided to decoder 23 which provides a decoded bar code label output at terminal 44. Alternatively, the function of decoder 23, which may have a serial or parallel output, may be included in the programming of digital signal processor 38.

On the other hand, if by examination of the location scores, no bar code was found in the stored image in DRAM 32, then digital signal processor 38 through ASIC controller 34 may command the optical system 26, the image sensor array 28 and the A/D converter 30 to acquire another image in DRAM 32 for processing. The process of acquiring and processing images may continue until a bar code symbol is successfully scanned.

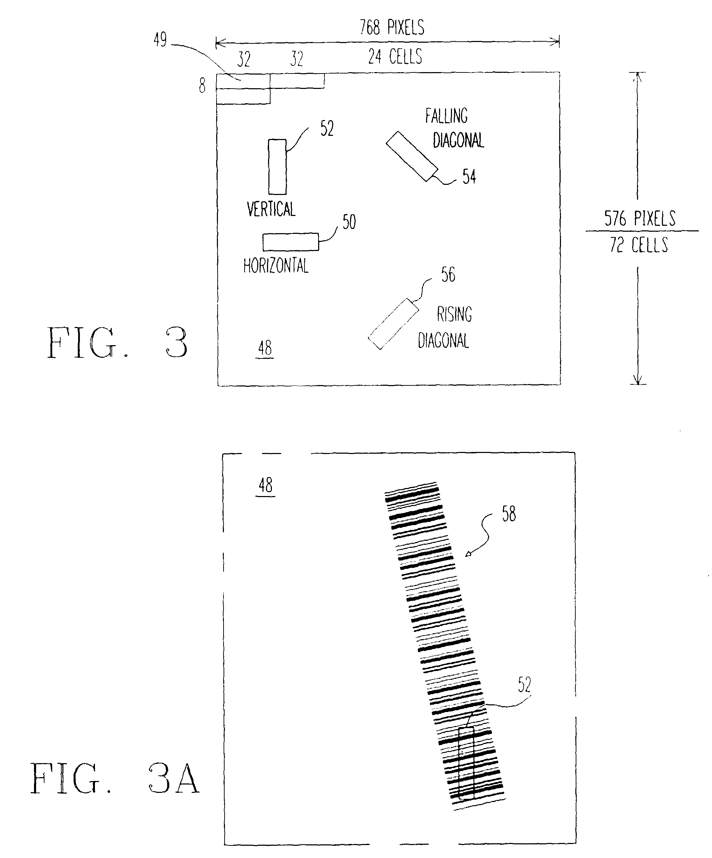

The organization of the stored DRAM image area 48 is shown in figure 3. The image sensor array 28 (figure 2) has 768 pixels in the horizontal direction and 576 pixels in the vertical direction. A suitable image sensor for use with the present invention is the MOS image sensor array 98268 available from Hitachi Corporation. The image area 48 is conceptually divided into cells, such as cell 49. Specifically, the image area 48 is divided into 24 cells in the horizontal direction and 72 cells in the vertical direction, with each cell being 8 by 32 pixels. That is, each cell has 8 scan lines, with each scan line having 32 pixels.

The image area 48 is divided into cells in each of four directions. That is, image area 48 is divided into horizontal cells such as cell 50. However, image area 48 is also divided vertical cells such as cell 52. Similarly, image area 48 is divided into cells along a rising diagonal i.e. 45 degrees such as cell 56. Finally, image area 48 is divided into cells along a falling diagonal i.e. 135 degrees such as cell 54. Using four directions of scan lines permits the location process to also determine the coarse orientation of the located bar code image in the same operation.

For purposes of illustration, figure 3A shows a bar code symbol somewhere within the field of view of image area 48 and oriented 14 degrees off the vertical direction. A typical vertical cell 52 is shown superimposed over a portion of bar code symbol 58.

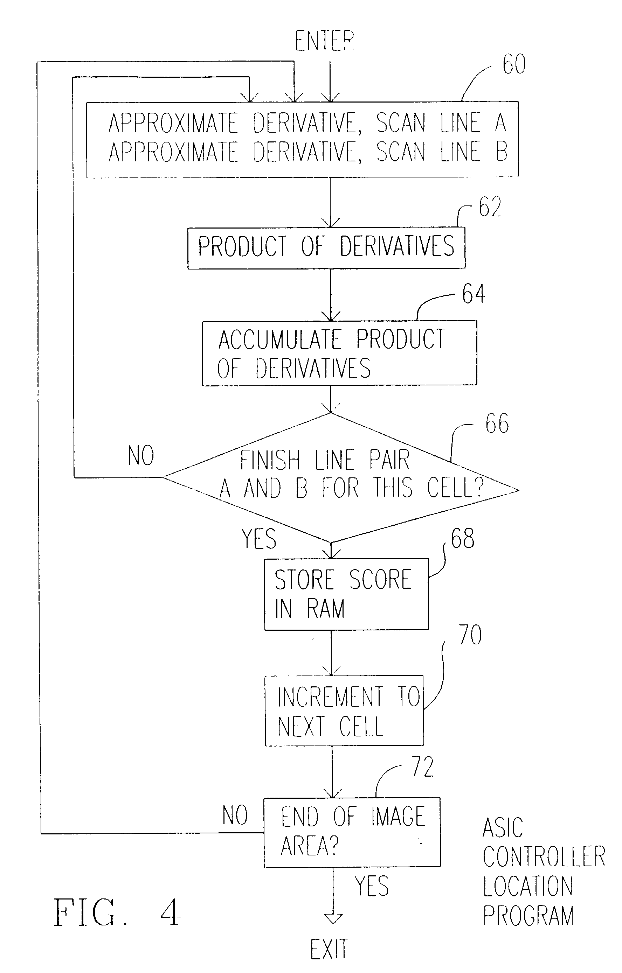

The portion of the program of the ASIC controller 34 (figure 2) for determining the location or locations likely to contain a bar code symbol is shown in the flow chart of figure 4. For a given cell in image area 48, the process uses two scan lines, i.e. scan line A, and scan line B. Specifically, scan line A is the first of the eight scan lines of a given cell, and scan line B is the fifth scan line of a given cell. After entering the location program, the approximate derivative of scan line A, and the approximate derivative of scan line B, are calculated at step 60. For this purpose, a derivative is approximated by taking the difference between any two consecutive pixels. In order to speed up the process of taking an approximate derivative, every other pixel is used in the calculation, i.e. instead of using all 32 pixels across a scan line of a given cell, every other pixel i.e. 16 pixels are used to approximate a derivative.

After finding the approximate derivatives at each point of scan line A and scan line B at step 60, the point by point product of both derivatives is calculated at step 62. Thereafter, the sum of the products of derivatives is accumulated at step 64. This process of accumulating the sum of the product of derivatives continues until all the points of scan lines A and B are completed for this cell at step 66. At this point, the accumulated product of derivatives constitutes the location score for this particular cell. The location score is then stored in SRAM at step 68. The program increments to the next cell in the image area at step 70. The process of computing location scores continues from cell to cell until the end of the image area is detected at step 72, and the program is exited.

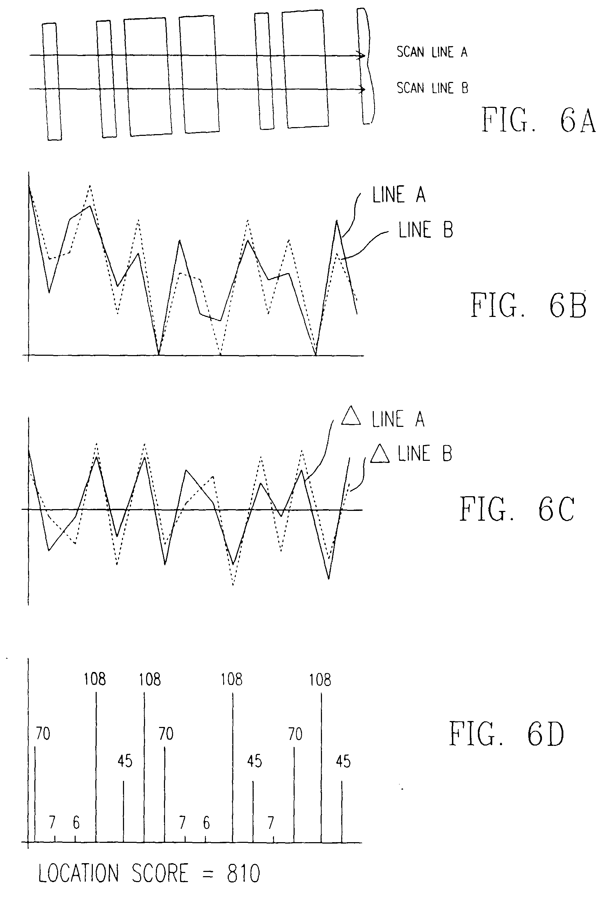

The process of computing a location score for a cell is illustrated in figures 6A through 6D. In figure 6A, scan line A and scan line B are shown at a slight angle across a portion of a bar code symbol. Figure 6B shows the reflectance signals at approximately 1.5 pixels per narrow bar for both scan line A and scan line B. The data points are simply connected by straight lines. Figure 6C shows the result of taking the difference between successive data points along scan line A and successive data points along scan line B to produce an approximate derivative shown as delta scan line A and delta scan line B, respectively. Figure 6D shows the product of each data point along delta scan line A and the corresponding data point along delta scan line B. Thus, each score in figure 6D for each data point is the product of the approximate derivatives of each respective data point of scan line A and scan line B. Adding up the sum of the derivatives produces a location score equal to 810, which is a relatively high score because scan line A and scan line B are directly through a bar code symbol.

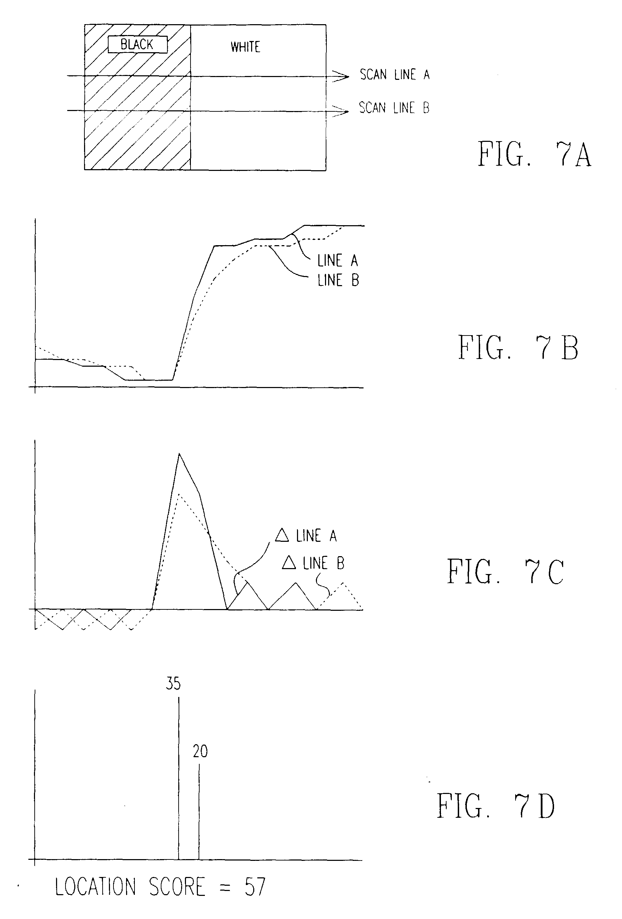

To illustrate the ability of the location algorithm to distinguish bar codes from simple transitions between black and white areas, figures 7A through 7D indicate the corresponding location score for a simple black to white transition. Figure 7A shows an image with a black to white transition with two scan lines, scan line A and scan line B therethrough. Figure 7B shows the reflectance signals for scan line A and scan line B. Figure 7C shows the approximate derivative or delta scan line A and delta scan line B, while figure 7D shows the sum of the derivatives for each point on both scan line A and scan line B. The resulting location score of 57 from figure 7D for the image in figure 7A is considerably less than the location score of 810 for the bar code in figure 6A.

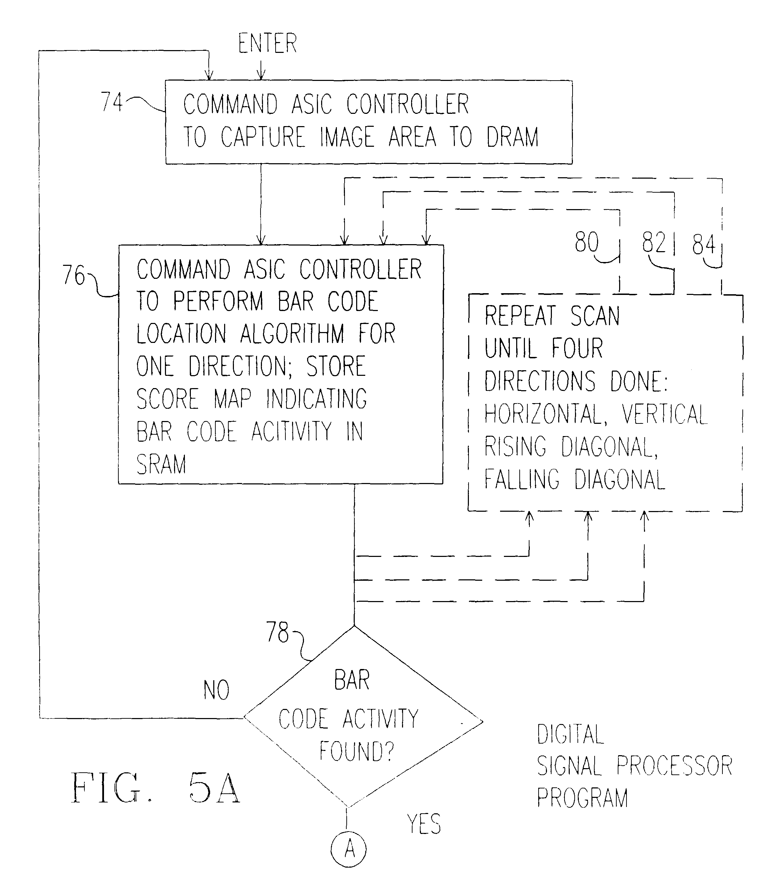

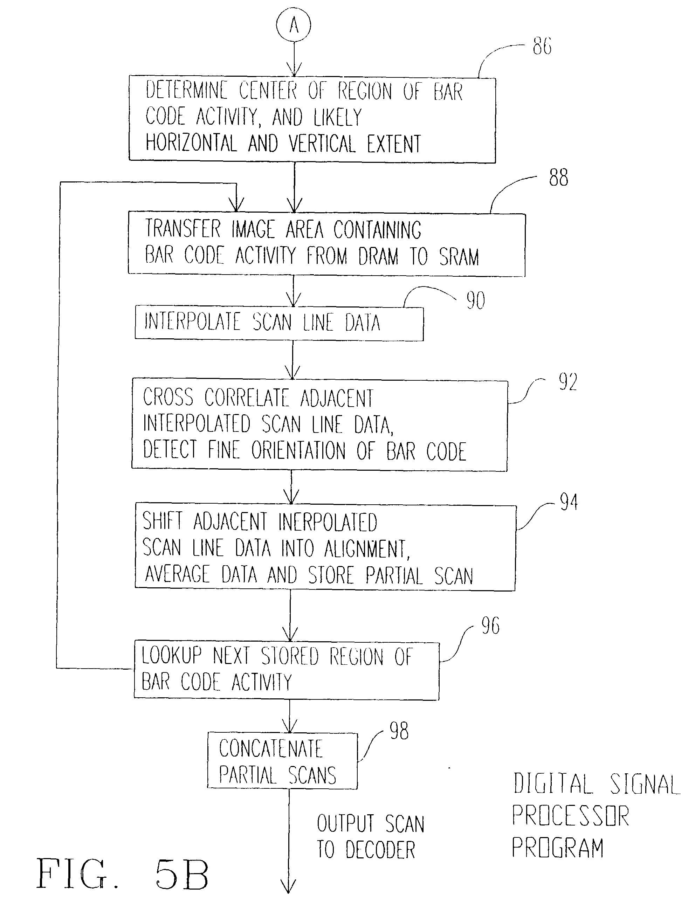

The program flow chart for the digital signal processor 38 in figure 2, is shown in figures 5A and 5B. Responsive to an input signal on terminal 40 of figure 2, to initiate a bar code read, the digital signal processor 38 enters the program as shown in the flow chart of figure 5A. The first step 74, is to command the ASIC controller to capture the image area to DRAM. Once the image area is captured, the next step 76 is to command the ASIC controller to perform the bar code location algorithm (in accordance with the flow chart of figure 4, discussed above) for one direction i.e. the horizontal direction. As the location algorithm is performed for all cells in the horizontal direction in image area 48, the ASIC controller stores the results in SRAM. Each cell score is an indication of the likelihood of bar code activity. The complete set of scores for a given direction forms a map of the likely regions of bar code activity. This process is repeated for all four directions i.e. location scores for a vertical scan are computed and stored in SRAM thorough program loop 80; location scores for a rising diagonal scan, i.e. a 45 degree scan, are computed and stored in SRAM thorough program loop 82; and location scores for a falling diagonal scan, i.e. a 135 degree scan, are computed and stored in SRAM thorough program loop 84.

Once the cell activity score map for a particular direction has been computed and stored in SRAM, the digital signal processor program determines whether or not bar code activity is present at step 78. For this purpose, a simple threshold may be utilized, examining all location scores that exceed a given threshold. If no score exceeds a given threshold, then no bar code activity is found, and the program repeats starting from step 74 in which the ASIC controller captures a new image area to DRAM. However, if bar code activity is detected at step 78, the subsequent digital signal processor program, in accordance with the flow chart of figure 5B, proceeds to orient, filter, and scan the located bar code.

The first step is to determine from the location scores stored in SRAM, the center of the region of bar code activity, and the likely horizontal and vertical extent of such activity, at step 86. The approximate center and extent of bar code activity may be determined by region growing applied to the cell activity score map. Region growing is a common image processing task to identify a particular region of an overall image which particular region possesses a specific characteristic, in this case, large values. Region growing is a technique well known to those skilled in the art of image processing, and is disclosed in "MATRIX STRUCTURED IMAGE PROCESSING" by Dougherty and Giardina, published 1987 by Prentice-Hall Inc, Englewood Cliffs, New Jersey 07632.

After the region of interest has been determined, the digital signal processor commands the ASIC controller to transfer the image area containing bar code activity from DRAM to SRAM at step 88. SRAM memory space is generally smaller than DRAM memory space, and typically represents a few percent of the total image area stored in DRAM. Although SRAM is generally faster than DRAM, the use of a relatively smaller SRAM is more economical since the cost of SRAM is typically more than DRAM. Also, the area of the image stored in SRAM may or may not be related to the size of the cell areas from the DRAM image memory. Due to the smaller size of the SRAM, the latter may hold only a portion of a bar code, in which case processing steps are repeated for partial scans and the partial scans later combined to form a complete scan.

Once the image is transferred to SRAM memory, the digital signal processor interpolates each of the scan lines of data for a given image area of interest at step 90. The process of interpolation is well known to those skilled in the art of digital signal processing, and is described by Peled and Liu in "DIGITAL SIGNAL PROCESSING theory, design, and implementation", published 1976 by John Wiley and Sons. Interpolation increases the effective sampling rate of the scan line data by fitting the best curve to the data with frequencies below the Nyquist limit.

The bar code image is initially sampled at about 1.5 pixels per narrow bar. To create a smoother curve, the signal is upsampled by four times. In simple terms, rather than connecting the data points by straight lines, additional data points are added between the actual data points to form a smoother curve.

After interpolating each of the scan lines at step 90, the first scan line of a given cell is cross-correlated with successive adjacent interpolated scan line data as indicated in step 92. Cross-correlation provides a measure of the similarity, or match, between two curves. Techniques for cross-correlating two signals are well known to those skilled in the art, and a discussion of cross-correlation may be found in "DIGITAL PROCESSING OF SPEECH SIGNALS" by Rabiner and Schafer published 1978 by Prentiss Hall, Englewood Cliffs, NJ 07632.

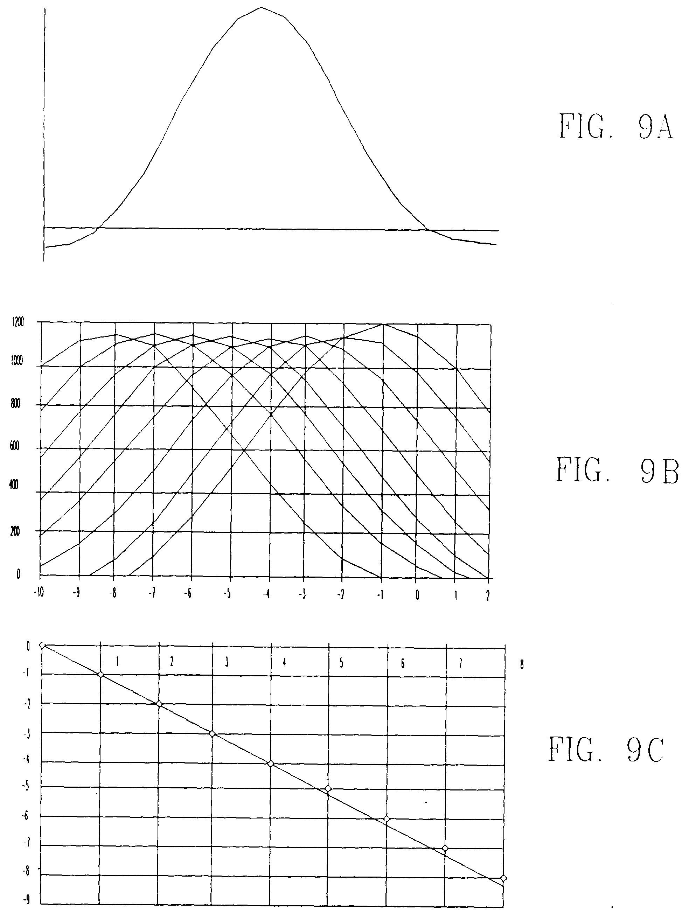

Successive cross-correlation between adjacent interpolated scan line data provides a means to determine the fine orientation of the bar code symbol also at step 92. The detected fine orientation of the bar code is derived from the difference between the average peaks of successive cross-correlations between adjacent interpolated scan lines. The position of the peak of the cross-correlation function of two scan lines represents the amount one scan line of data must be shifted in order to provide the best alignment with the other scan line of data. Calculation of the actual angle of the bars is discussed below in relation to figure 9A through figure 9C.

After the fine orientation of the bar code is known, each interpolated scan line data is shifted into alignment at step 94. After the interpolated scan line data has been shifted into alignment, the average of all scan lines is computed. At this point, the bar code symbol may be decoded into a partial bar code scan at step 94.

The partial bar code scan is stored at step 94, and the next stored region of interest is determined at step 96. That is, the next area of interest which is likely to contain a bar code image is then transferred from DRAM to SRAM at step 88. The process of interpolation and cross-correlation is repeated until another partial bar code scan, representing an adjacent image area of interest, is stored.

Once all of the stored regions containing bar code activity have been scanned, the partial scans are concatenated, or connected to form a complete scan at step 98. Finally, at step 98 the output scan is forwarded to a decoder, known to those skilled in the art, for converting the complete concatenated bar code scan into a sequence of alphanumeric characters which represent the content of the bar code.

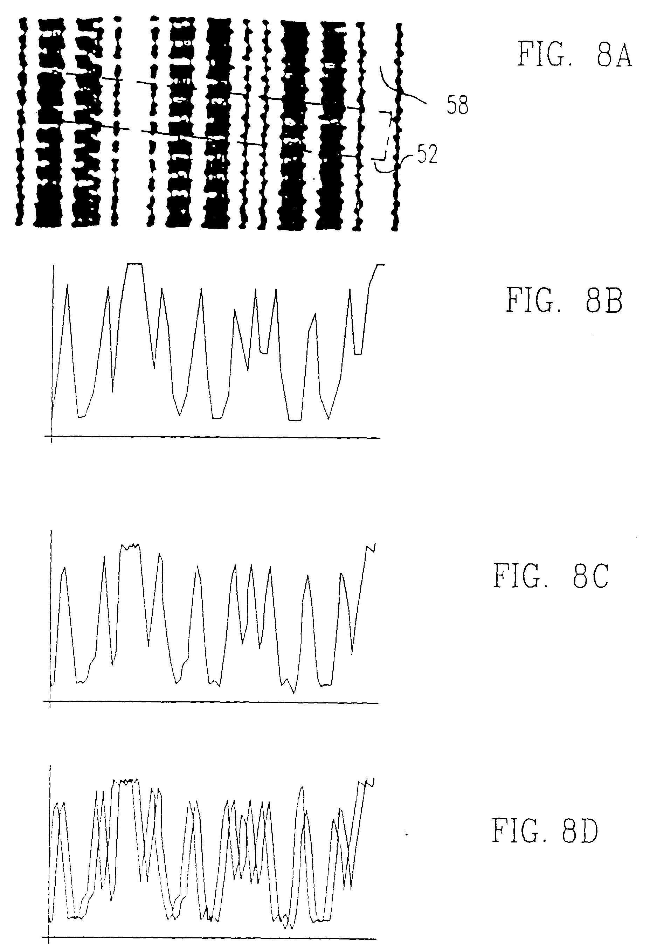

Figures 8A through 8G and figures 9A through 9C illustrate the processes for detecting fine orientation, filtering and scanning of a bar code that has been located in a given cell. Specifically, figure 8A illustrates a vertical cell 52 consisting of 8 scan lines superimposed over a portion of a bar code label 58. The poor appearance, or spottiness of the bars is actually representative of the condition of many printed bar code labels encountered in practice.

Figure 8B shows the 32 pixels of the first scan line of cell 52 connected by straight lines. Figure 8C shows the same 32 data points after interpolation, or upsampling by four times. Figure 8D shows one upsampled scan line, and another upsampled scan line which is 4 scan lines away. It is evident there is an offset between the two waveforms. This offset is indicative of the orientation offset of the bars.

Although the offset is visibly apparent in figure 8D, it is necessary to compute the magnitude of the offset, i.e. the actual orientation angle of the bars. The cross correlation function is well suited for this task.

Figures 9A through 9C illustrate the process of determining the fine orientation of the bar code symbol. Figure 9A shows the cross-correlation function of the first and second scan lines of the sampled signal. Note that the peak is at a lag of about minus one. This means that over a distance from one scan line to the next, the waveform is shifted one upsampled pixel, or one fourth of an original pixel. This yields a bar code slope of one fourth, or 0.25, which corresponds well with the measured slope of about 14 degrees, since the arctangent of 0.25 equals 14.036 degrees.

Figure 9B shows a family of cross-correlation curves. Each curve is the result of cross-correlating the first scan line with the scan line successively further away. Note that the peaks step over extremely consistently by one for each curve. By using interpolation, it is possible to find the position of a peak in the cross-correlation function to fractional pixel accuracy. Figure 9C is a plot of the cross-correlation function for each scan line compared to the first scan line of the given area of interest. Note that the calculated peak values lie almost perfectly along a straight line, the slope of which represents the fine orientation angle of the bar code symbol. In general, not all of the peak values may lie on a straight line, in which case the average slope may be taken to represent the fine orientation of the bar code symbol.

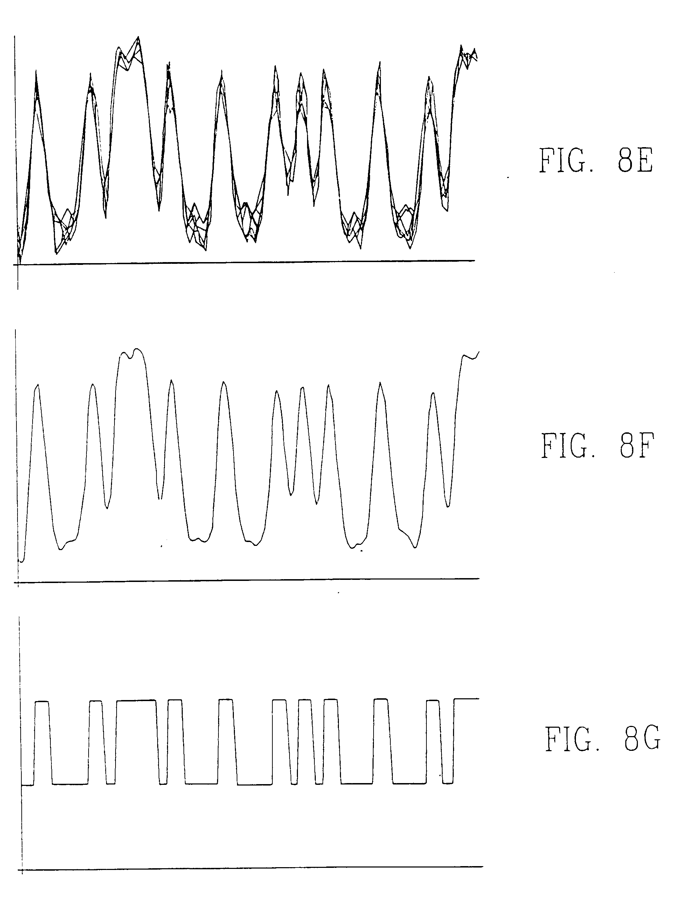

Once the fine orientation of the bars is known, each of the interpolated scan line data is shifted into alignment as shown in figure 8E, and the average value taken as shown in figure 8F. Taking the average of corresponding sample points from the shifted lines of interpolated scan line data, provides a simple approach to bar code filtering. Averaging effectively filters perpendicular to the orientation of the bar code. In the alternative, the median value of each data point could be used to reduce the effect of occasional missing pieces of the bar code label. That is, a white spot on a black bar effects the median data value less than the average data value. Another approach is to take a weighted average based on cross-correlation scores to provide better rejection of poorly correlated scan line data. In the latter case, those interpolated scan lines that correlate well with each other would count more heavily in the average, while those interpolated scan lines which cross-correlate poorly would weight the average correspondingly less.

As used herein, "shifting" scan line data includes both actual shifting of scan line data within the image memory as well as virtual shifting of scan line data by the use of an offset vector to be added to the location of sequential values extracted from said memory.

It is further noted that bar code fine orientation may be achieved by cross-correlation of selected pairs of scan line data alone, without interpolation of scan line data if there are sufficient data points, or pixels per narrow bar. Otherwise, interpolation is used to generate the additional data points for the cross-correlation to be meaningful. Finally, in shifting scan lines into alignment, all successive scan line data may be correlated to a single reference line, or in the alternative, successive scan line data may be correlated in line pairs and not referenced to a single scan line.

The aggregate waveform in figure 8F is then converted to a binary value waveform as shown in figure 8G using the overall signal average as the binary threshold. The zero level of the waveform in figure 8G corresponds to the black level of the bar code in figure 8A, while the one level corresponds to the white level.

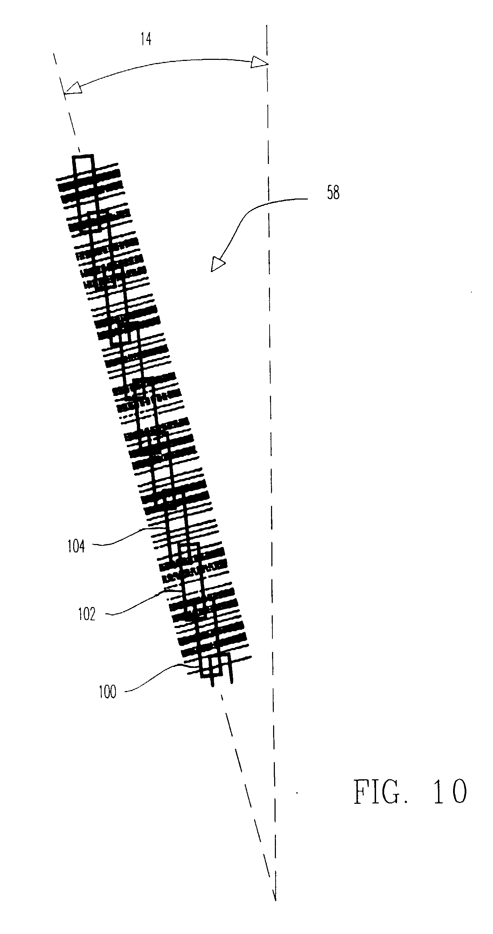

Thus, a partial scan of the bar code shown in figure 8A corresponding to the cell 52 has been performed. Figure 10 shows how successive partial scans 100, 102 and 104 may be concatenated to form a complete scan of bar code 58. The partial scans overlap each other so that no bar code data is lost. The successive partial scans are taken in steps along an angle corresponding to the measured fine orientation of the bars. That is, since the fine orientation of the bars is 14 degrees, a staircase of partial scans along a 14 degree angle off the vertical, is constructed in order to acquire partial scans which can be concatenated into a complete scan of the bar code label.

Thus, a bar code reader has been disclosed which is capable of reading a bar code symbol contained anywhere within the field of view of an image area in an omnidirectional manner. Although the embodiment disclosed suggests the use of an area image capture device, it will be appreciated that a linear image capture device as may be used with a moving conveyor belt, may also be used.

## Claims

1. A method for reading a bar code comprising:
capturing (26) and storing (32) a two dimensional image containing an image of a bar code anywhere within said two dimensional image (Fig. 3A);
processing (34, 38) said stored two dimensional image to determine the location of said bar code image, and decoding (23) said bar code image, characterized in that:
said processing to determine the location of said bar code includes the step of scanning said two dimensional image in an omnidirectional manner (76, 80, 82, 84), and the step of comparing (Fig. 4) corresponding points of a function of the reflective waveforms of at least two parallel line segments of said scanning to evaluate the likelihood of said line segments extending through an area containing a bar code symbol image.

2. A method as claimed in Claim 1 in which said comparing step (Fig. 4) is performed in each of a plurality of location areas in said two dimensional image.

3. A method as claimed in Claim 2 in which said comparing step (Fig. 4) is performed in each of said plurality of location areas for respective parallel line segments extending in a plurality of directions to obtain an indication of the orientation of a bar code symbol image located within any one of said location areas.

4. A method as claimed in Claim 2 or 3 in which a bar code image extends over a plurality of location areas (Fig. 10), and further comprising the step of determining over which areas said bar code extends and concatenating a sequence of such areas to obtain the complete bar code for decoding (Fig. 10).

5. A method as claimed in Claim 1 in which said comparison step is performed on respective parallel line segments extending in a plurality of directions (Fig. 5A) to obtain an indication of the orientation of a bar code symbol located by the comparison step.

6. A method as claimed in any one of Claims 1 - 5, wherein the comparison step (Fig. 4) applied to two parallel line segments comprises:
approximating (60) a derivative of a first of said parallel line segments;
approximating (60) a derivative of a second of said parallel line segments;
multiplying (62) said derivative of said first line segment and said derivative of said second line segment to obtain a product of said derivative of said first scan line and said derivative of said second scan line; and
accumulating (64) the sum of the respective products of said derivative of said first line segment and said derivative of said second line segment to provide a location score (68) for said area through which said line segments extend, wherein said location score represents the relative likelihood that said area contains a bar code symbol image.

7. A method as claimed in Claim 1 or 2 further comprising examining an area in which a bar code symbol image is contained to determine the orientation of this bar code symbol image.

8. A method as claimed in Claim 3 or 4 in which said orientation of a bar code symbol image is further determined by the steps of:
interpolating (90) a first of two parallel line segments;
interpolating (90) a second of two parallel line segments;
calculating (92) a cross-correlation function of said interpolated first line segment data and said interpolated second line segment data; and
detecting a peak of said cross-correlation function of said first and second interpolated line segment data, wherein the position of said peak of said cross-correlation function of said interpolated first and second line segment data corresponds to the orientation of said bar code symbol image.

9. A method as claimed in Claim 7, further comprising:
shifting (94) said interpolated second line segment data so as to be aligned with said interpolated first line segment data in accordance with said detected peak of said cross-correlation function of said interpolated first and second line segment data.

10. A method as claimed in any one of Claims 3 to 9 further including filtering (20) a located bar code symbol image along an axis substantially perpendicular to the orientation of said bar code symbol image, said filtering (20) being performed prior to decoding of said bar code symbol image.

11. A method as claimed in any one of Claims 3 to 10 in which the decoding of the bar code symbol image is performed by scanning (22) in a direction substantially that of the orientation of the bar code symbol image.

12. A bar code reader comprising means (26, 32) for capturing and storing a two dimensional image containing an image of a bar code anywhere within said two dimensional image (Fig. 3A), and means (34,38,23) for processing said stored two dimensional image and decoding said bar code image, said processing and decoding means (34,38,23) being operable to locate said bar code image within said two dimensional image, characterized in that:
said processing and decoding means comprises:
means (34) for scanning said stored two dimensional image in an omnidirectional manner; and
means (34, Fig. 4) for comparing corresponding points of a function of the reflective waveforms of at least two parallel line segments of the scanning to evaluate the likelihood said line segments extending through an area containing a bar code symbol image.

13. A bar code reader as claimed in Claim 12 in which said comparing means (34) is programmed to compare points as aforesaid in each of a plurality of location areas in said two dimensional image.

14. A bar code reader as claimed in Claim 13 in which said comparing means (34) is programmed to compare points as aforesaid in each of said plurality of location areas for respective parallel line segments extending in a plurality of directions to obtain an indication of the orientation of a bar code symbol image located within any one of said location areas.

15. A bar code reader as claimed in Claim 13 or 14 in which a bar code image extends over a plurality of location areas (Fig. 10), and further comprising means (38) for determining over which areas said bar code extends and concatenating a sequence of such areas to obtain the complete bar code for decoding (Fig. 10).

16. A bar code reader as claimed in Claim 12 in which said comparing means is programmed to compare points as aforesaid on respective parallel line segments extending in a plurality of directions (Fig. 5A) to obtain an indication of the orientation of a located bar code symbol image.

17. A bar code reader as claimed in any one of Claims 12 - 16 wherein the comparing means (34) is programmed to compare points as aforesaid for two parallel line segments by the following steps:
approximating (60) a derivative of a first of said parallel line segments;
approximating (60) a derivative of a second of said parallel line segments;
multiplying (62) said derivative of said first line segment and said derivative of said second line segment to obtain a product of said derivative of said first scan line and said derivative of said second scan line; and accumulating (64)the sum of the respective products of said derivative of said first line segment and said derivative of said second line segment to provide a location score (68) for said area through which said line segments extend, wherein said location score represents the relative likelihood that said area contains a bar code symbol image.

18. A bar code reader as claimed in Claim 12 or 13, in which said processing means (34) further comprises means (16)for examining an area in which a bar code symbol image is contained to determine the orientation of this bar code symbol image.

19. A bar code reader as claimed in Claim 14 or 15, further comprising means (18) programmed to make orientation of a bar code symbol image, by the steps of:
interpolating (90) a first of two parallel line segments;
interpolating (90) a second of two parallel line segments;
calculating (92) a cross-correlation function of said interpolated first line segment data and said interpolated second line segment data; and
detecting a peak of said cross-correlation function of said first and second interpolated line segment data, wherein the position of said peak of said cross-correlation function of said interpolated first and second line segment data corresponds to the orientation of said bar code symbol image.

20. A bar code reader as claimed in Claim 15, in which said means for making a fine determination of a bar code symbol image is further programmed to:
shift (94) said interpolated second line segment data so as to be aligned with said interpolated first line segment data in accordance with said detected peak of said cross-correlation function of said interpolated first and second line segment data.

21. A bar code reader as claimed in any one of Claims 14 to 20 further including means (20) to filter a located bar code symbol image along an axis substantially perpendicular to the orientation of said bar code symbol image and prior to decoding of said bar code symbol image.

22. A bar code reader as claimed in any one of claims 14 to 21 in which the processing and decoding means (38, 23) is operable to decode a located bar code symbol image by scanning (22) the located bar code symbol image in a direction substantially that of the orientation of the bar code symbol image.

## Patentansprüche

1. Verfahren zum Lesen eines Strichcodes, umfassend:
Aufnehmen (26) und Speichern (32) eines zweidimensionalen Abbildes, welches irgendwo innerhalb des zweidimensionalen Abbildes (Fig. 3A) ein Abbild eines Strichcodes enthält;
Verarbeiten (34, 38) des abgespeicherten zweidimensionalen Abbildes zum Bestimmen der Lage des Strichcode-Abbildes und zum Decodieren (23) des Strichcode-Abbildes,
**dadurch gekennzeichnet, daß**
das Verarbeiten zum Bestimmen der Lage des Strichcodes den Schritt des Abtastens des zweidimensionalen Abbildes in einer alle Richtungen berücksichtigenden Art und Weise (76, 80, 82, 84) und den Schritt des Vergleichens (Fig. 4) einander zugeordneter Punkte einer Funktion der Reflexions-Wellenformen von mindestens zwei parallelen Streckenabschnitten der Abtastung einschließt, um die Wahrscheinlichkeit, daß sich die Streckenabschnitte durch eine Gegend erstrecken, die ein Strichcode-Symbolabbild enthält, abzuschätzen.

2. Verfahren nach Anspruch 1, wobei der Vergleichungsschritt (Fig. 4) für jede Lagegegend aus einer Anzahl von Lagegegenden des zweidimensionalen Abbildes ausgeführt wird.

3. Verfahren nach Anspruch 2, wobei der Vergleichungsschritt (Fig. 4) für jede Lagegegend aus der Anzahl von Lagegegenden für einander zugeordnete parallele Streckenabschnitte ausgeführt wird, die sich in eine Anzahl von Richtungen erstrecken, um eine Angabe über die Ausrichtung eines innerhalb einer der Lagegegenden angeordneten Strichcode-Symbolabbildes zu erhalten.

4. Verfahren nach Anspruch 2 oder 3, wobei sich ein Strichcode-Abbild über eine Anzahl von Lagegegenden (Fig. 10) erstreckt, und wobei das Verfahren ferner den Schritt des Bestimmens, über welche Gegenden sich der Strichcode erstreckt, und des Verkettens einer Folge derartiger Gegenden zum Gewinnen des vollständigen Strichcodes für das Decodieren (Fig. 10) aufweist.

5. Verfahren nach Anspruch 1, wobei der Vergleichungsschritt für einander zugeordnete, sich in eine Vielzahl von Richtungen (Fig. 5A) erstreckende parallele Streckenabschnitte ausgeführt wird, um eine Angabe über die Ausrichtung eines durch den Vergleichungsschritt lokalisierten Strichcode-Symbols zu erhalten.

6. Verfahren nach einem der Ansprüche 1 bis 5, wobei der auf die zwei parallelen Streckenabschnitte angewandte Vergleichungsschritt (Fig. 4) aufweist:
Annähern (60) an eine Ableitung eines ersten Streckenabschnittes der parallelen Streckenabschnitte;
Annähern (60) an eine Ableitung eines zweiten Streckenabschnittes der parallelen Streckenabschnitte;
Multiplizieren (62) der Ableitung des ersten Streckenabschnittes und der Ableitung des zweiten Streckenabschnittes, um ein Produkt der Ableitung der ersten Abtastungslinie und der Ableitung der zweiten Abtastungslinie zu erhalten, und
Aufsummieren (64) der Summe der einander zugeordneten Produkte der Ableitung des ersten Streckenabschnittes und der Ableitung des zweiten Streckenabschnittes, um eine Bewertungsgröße der Lage (68) für die Gegend, durch die sich die Streckenabschnitte erstrecken, zu erhalten, wobei die Bewertungsgröße der Lage die relative Wahrscheinlichkeit repräsentiert, daß die Gegend ein Strichcode-Symbolabbild enthält.

7. Verfahren nach Anspruch 1 oder 2, ferner aufweisend das Untersuchen einer Gegend, in welcher ein Strichcode-Symbolabbild enthalten ist, um die Ausrichtung dieses Strichcode-Symbolabbildes zu bestimmen.

8. Verfahren nach Anspruch 3 oder 4, wobei die Ausrichtung eines Strichcode-Symbolabbildes ferner durch folgende Schritte bestimmt wird:
Interpolieren (90) eines ersten Streckenabschnittes von zwei parallelen Streckenabschnitten;
Interpolieren (90) eines zweiten Streckenabschnittes von zwei parallelen Streckenabschnitten;
Berechnen (92) einer Kreuzkorrelationsfunktion der Daten des interpolierten ersten Streckenabschnittes und der Daten des interpolierten zweiten Streckenabschnittes; und
Detektieren eines Peaks der Kreuzkorrelationsfunktion der Daten der interpolierten ersten und des zweiten Streckenabschnitte, wobei die Position des Peaks der Kreuzkorrelationsfunktion der Daten der interpolierten ersten und zweiten Streckenabschnitte der Ausrichtung des Strichcode-Symbolabbildes entspricht.

9. Verfahren nach Anspruch 7, ferner aufweisend:
Verschieben (94) der Daten des interpolierten zweiten Streckenabschnittes, um ihn so mit den Daten des ersten interpolierten Streckenabschnittes in Übereinstimmung mit dem detektierten Peak der Kreuzkorrelationsfunktion der Daten des interpolierten ersten Streckenabschnittes und des interpolierten zweiten Streckenabschnittes auszurichten.

10. Verfahren nach einem der Ansprüche 3 bis 9, ferner einschließend das Filtern (20) eines lokalisierten Strichcode-Symbolabbildes entlang einer im wesentlichen senkrecht zu der Orientierung des Strichcode-Symbolabbildes ausgerichteten Achse, wobei das Filtern (20) vor dem Decodieren des Strichcode-Symbolabbildes durchgeführt wird.

11. Verfahren nach einem der Ansprüche 3 bis 10, wobei das Decodieren des Strichcode-Symbolabbildes durch Abtasten (22) in einer Richtung, die im wesentlichen gleich der Ausrichtung des Strichcode-Symbolabbildes ist, durchgeführt wird.

12. Strichcode-Leser, aufweisend:
Eine Einrichtung (26, 32) zum Aufnehmen und Speichern eines zweidimensionalen Abbildes, welches irgendwo innerhalb des zweidimensionalen Abbildes (Fig. 3A) ein Abbild eines Strichcodes enthält, und
eine Einrichtung (34, 38, 23) zum Verarbeiten des gespeicherten zweidimensionalen Abbildes und zum Decodieren des Strichcode-Abbildes, wobei die Verarbeitungs- und Decodierungseinrichtung zum Lokalisieren des Strichcode-Abbildes innerhalb des zweidimensionalen Abbildes betreibbar ist,
**dadurch gekennzeichnet, daß**
die Verarbeitungs- und Decodierungseinrichtung aufweist:
Eine Einrichtung (34) zum Abtasten des gespeicherten zweidimensionalen Bildes in einer alle Richtungen berücksichtigenden Art und Weise; und
eine Einrichtung (34, Fig. 4) zum Vergleichen einander zugeordneter Punkte einer Funktion der Reflexions-Wellenformen von mindestens zwei parallelen Streckenabschnitten der Abtastung zum Abschätzen der Wahrscheinlichkeit, daß die Streckenabschnitte sich durch eine Gegend erstrecken, die ein Strichcode-Symbolabbild enthält.

13. Strichcode-Leser nach Anspruch 12, wobei die Vergleichereinrichtung (34) derart programmiert ist, so daß Punkte wie zuvor erwähnt in jeder der Lagegegenden aus einer Vielzahl von Lagegegenden in dem zweidimensionalen Abbild verglichen werden.

14. Strichcode-Leser nach Anspruch 13, wobei die Vergleichereinrichtung (34) derart programmiert ist, so daß Punkte wie zuvor erwähnt in jeder der Lagegegenden aus der Vielzahl von Lagegegenden für einander zugeordnete parallele Streckenabschnitte, die sich in eine Vielzahl von Richtungen erstrecken, verglichen werden, um eine Angabe der Ausrichtung eines innerhalb irgendeiner der Lagegegenden lokalisierten Strichcode-Symbolabbildes zu erhalten.

15. Strichcode-Leser nach Anspruch 13 oder 14, wobei ein Strichcode-Abbild sich über eine Vielzahl von Lagegegenden (Fig. 10) erstreckt, und ferner mit einer Einrichtung (39) zum Bestimmen, über welche Gegenden sich der Strichcode erstreckt, und zum Verketten einer Folge derartiger Gegenden zum Gewinnen des vollständigen Strichcodes für das Decodieren (Fig. 10).

16. Strichcode-Leser nach Anspruch 12, wobei die Vergleichereinrichtung derart programmiert ist, so daß Punkte wie zuvor erwähnt auf einander zugeordneten parallelen Streckenabschnitten, die sich in eine Vielzahl von Richtungen (Fig. 5A) erstrecken, verglichen werden, um eine Angabe über die Ausrichtung eines lokalisierten Strichcode-Symbolabbildes zu gewinnen.

17. Strichcode-Leser nach einem der Ansprüche 12 bis 16, wobei die Vergleichereinrichtung (34) derart programmiert ist, um, wie zuvor erwähnt, Punkte für zwei parallele Streckenabschnitte durch die folgenden Schritte zu vergleichen:
Annähern (60) an eine Ableitung eines ersten Streckenabschnittes der parallelen Streckenabschnitte;
Annähern (60) an eine Ableitung eines zweiten Streckenabschnittes der parallelen Streckenabschnitte;
Multiplizieren (62) der Ableitung des ersten Streckenabschnittes und der Ableitung des zweiten Streckenabschnittes, um ein Produkt der Ableitung der ersten Abtastungslinie und der Ableitung der zweiten Abtastungslinie zu erhalten, und
Aufsummieren (64) der Summe der einander zugeordneten Produkte der Ableitung des ersten Streckenabschnittes und der Ableitung des zweiten Streckenabschnittes, um eine Bewertungsgröße der Lage (68) für die Gegend, durch die sich die Streckenabschnitte erstrecken, zu erhalten, wobei die Bewertungsgröße der Lage die relative Wahrscheinlichkeit repräsentiert, daß die Gegend ein Strichcode-Symbolabbild enthält.

18. Strichcode-Leser nach Anspruch 12 oder 13, wobei die Verarbeitungseinrichtung (34) ferner eine Einrichtung (16) zum Untersuchen einer Gegend aufweist, in welcher ein Strichcode-Symbolabbild enthalten ist, um die Ausrichtung dieses Strichcode-Symbolabbildes zu bestimmen.

19. Strichcode-Leser nach Anspruch 14 oder 15, ferner mit einer Einrichtung (18), die programmiert ist, um die Lagebestimmung eines Strichcode-Symbolabbildes durch die Schritte durchzuführen:
Interpolieren (90) eines ersten Streckenabschnittes von zwei parallelen Streckenabschnitten;
Interpolieren (90) eines zweiten Streckenabschnittes von zwei parallelen Streckenabschnitten;
Berechnen (92) einer Kreuzkorrelationsfunktion der Daten des interpolierten ersten Streckenabschnittes und der Daten des interpolierten zweiten Streckenabschnittes; und
Detektieren eines Peaks der Kreuzkorrelationsfunktion der Daten der interpolierten ersten und des zweiten Streckenabschnitte, wobei die Position des Peaks der Kreuzkorrelationsfunktion der Daten der interpolierten ersten und zweiten Streckenabschnitte der Ausrichtung des Strichcode-Symbolabbildes entspricht.

20. Strichcode-Leser nach Anspruch 15, wobei die Einrichtung zum Durchführen einer Feinbestimmung eines Strichcode-Symbolabbildes ferner programmiert ist, um:
die Daten des interpolierten zweiten Streckenabschnittes so zu verschieben (94), um ihn so mit den Daten des interpolierten ersten Streckenabschnittes in Übereinstimmung mit dem detektierten Peak der Kreuzkorrelationsfunktion der Daten des interpolierten ersten Streckenabschnittes und des interpolierten zweiten Streckenabschnittes auszurichten.

21. Strichcode-Leser nach einem der Ansprüche 14 bis 20, ferner aufweisend eine Einrichtung (20) zum Filtern eines lokalisierten Strichcode-Symbolabbildes entlang einer im wesentlichen senkrecht zu der Ausrichtung des Strichcode-Symbolabbildes ausgerichteten Achse vor dem Decodieren des Strichcode-Symbolabbildes.

22. Strichcode-Leser nach einem der Ansprüche 14 bis 21, wobei die Verarbeitungs- und Decodierungseinrichtung (38, 23) zum Decodieren eines lokalisierten Strichcode-Symbolabbildes durch Abtasten (22) des lokalisierten Strichcode-Symbolabbildes in eine Richtung, die im wesentlichen diejenige Richtung des Strichcode-Symbolabbildes ist, betreibbar ist.

## Revendications

1. Procédé de lecture d'un code à barres comprenant:
la saisie (26) et la mémorisation (32) d'une image bidimensionnelle contenant une image d'un code à barres à n'importe quel emplacement à l'intérieur de ladite image bidimensionnelle (Fig. 3A);
le traitement (34, 38) de ladite image bidimensionnelle mémorisée pour déterminer l'emplacement de ladite image de code à barres, et le décodage (23) de ladite image de code à barres, caractérisé en ce que :
ledit traitement pour déterminer l'emplacement dudit code à barres comprend l'étape d'exploration de ladite image bidimensionnelle d'une manière omnidirectionnelle (76, 80, 82, 84), et l'étape de comparaison (Fig. 4) des points correspondants d'une fonction des formes d'ondes réflectives d'au moins deux segments de lignes parallèles de ladite exploration pour évaluer la probabilité de prolongement desdits segments de lignes à travers une zone contenant une image de symbole de code à barres.

2. Procédé selon la Revendication 1 dans lequel ladite étape de comparaison (Fig. 4) est exécutée dans chacune d'une pluralité de zones de localisation dans ladite image bidimensionnelle.

3. Procédé selon la Revendication 2 dans lequel ladite étape de comparaison (Fig. 4) est exécutée dans chacune de ladite pluralité de zones de localisation pour des segments de lignes parallèles respectifs se prolongeant dans une pluralité de directions pour obtenir une indication de l'orientation d'une image de symbole de code à barres située dans l'une quelconque desdites zones de localisation.

4. Procédé selon la Revendication 2 ou 3 dans lequel une image de code à barres se prolonge sur une pluralité de zones de localisation (Fig. 10), et comprenant en outre l'étape de détermination des zones sur lesquelles se prolonge ledit code à barres et de concaténation d'une séquence desdites zones pour obtenir le code à barres complet à décoder (Fig. 10).

5. Procédé selon la Revendication 1 dans lequel ladite étape de comparaison est exécutée sur des segments de lignes parallèles respectifs se prolongeant dans une pluralité de directions (Fig. 5A) pour obtenir une indication de l'orientation d'un symbole de code à barres localisé par l'étape de comparaison.

6. Procédé selon l'une quelconque des Revendications 1-5, dans lequel l'étape de comparaison (Fig. 4) appliquée aux deux segments de lignes parallèles comprend :
l'approximation (60) d'un dérivé d'un premier desdits segments de lignes parallèles;
l'approximation (60) d'un dérivé d'un deuxième desdits segments de lignes parallèles;
la multiplication (62) dudit dérivé dudit premier segment de ligne et dudit dérivé dudit deuxième segment de ligne pour obtenir un produit dudit dérivé de ladite première ligne d'exploration et dudit dérivé de ladite deuxième ligne d'exploration; et
l'accumulation (64) de la somme des produits respectifs dudit dérivé dudit premier segment de ligne et dudit dérivé dudit deuxième segment de ligne pour fournir une note de localisation (68) pour ladite zone à travers laquelle se prolongent lesdits segments de lignes, où ladite note de localisation représente la probabilité relative que ladite zone contienne une image de symbole de code à barres.

7. Procédé selon la Revendication 1 ou 2 comprenant en outre l'examen d'une zone dans laquelle est contenue une image de symbole de code à barres pour déterminer l'orientation de cette image de symbole de code à barres.

8. Procédé selon la Revendication 3 ou 4 dans lequel ladite orientation d'une image de symbole de code à barres est en outre déterminée par les étapes de :
interpolation (90) d'un premier de deux segments de lignes parallèles;
interpolation (90) d'un deuxième de deux segments de lignes parallèles;
calcul (92) d'une fonction d'intercorrélation des données dudit premier segment de ligne interpolé et des données dudit deuxième segment de ligne interpolé; et
détection d'une crête de ladite fonction d'intercorrélation desdites données de premier et second segments de lignes interpolés, où la position de ladite crête de ladite fonction d'intercorrélation desdites données de premier et deuxième segments de lignes interpolés correspond à l'orientation de ladite image de symbole de code à barres.

9. Procédé selon la Revendication 7, comprenant en outre : le décalage (94) desdites données de deuxième segment de ligne interpolé de manière à l'aligner avec lesdites données de premier segment de ligne interpolé conformément à ladite crête détectée de ladite fonction d'intercorrélation desdites données de premier et deuxième segments de lignes interpolés.

10. Procédé selon l'une quelconque des Revendications 3 à 9 comprenant en outre le filtrage (20) d'une image de symbole de code à barres localisée le long d'un axe essentiellement perpendiculaire à l'orientation de ladite image de symbole de code à barres, ledit filtrage (20) étant effectué avant le décodage de ladite image de symbole de code à barres.

11. Procédé selon l'une quelconque des Revendications 3 à 10 dans lequel le décodage de l'image de symbole de code à barres est effectué par exploration (22) dans une direction qui est essentiellement celle de l'orientation de l'image de symbole de code à barres.

12. Lecteur de code à barres comprenant un moyen (26, 32) pour saisir et mémoriser une image bidimensionnelle contenant une image d'un code à barres à n'importe quel emplacement dans ladite image bidimensionnelle (Fig. 3A), et un moyen (34, 38, 23) pour traiter ladite image bidimensionnelle et décoder ladite image de code à barres, lesdits moyens de traitement et de décodage (34, 38, 23) pouvant être utilisés pour localiser ladite image de code à barres à l'intérieur de ladite image bidimensionnelle, caractérisé en ce que :
ledit moyen de traitement et de décodage comprend : un moyen (34) pour explorer ladite image bidimensionnelle mémorisée d'une manière omnidirectionnelle; et
un moyen (34, Fig. 4) pour comparer les points correspondants d'une fonction des formes d'ondes réflectives d'au moins deux segments de lignes parallèles de l'exploration pour évaluer la probabilité que lesdits segments de lignes se prolongent à travers une zone contenant une image de symbole de code à barres.

13. Lecteur de code à barres selon la Revendication 12 dans lequel ledit moyen de comparaison (34) est programmé pour comparer les points mentionnés ci-dessus dans chacune d'une pluralité de zones de localisation dans ladite image bidimensionnelle.

14. Lecteur de code à barres selon la Revendication 13, dans lequel ledit moyen de comparaison (34) est programmé pour comparer les points sus-mentionnés dans chacune de ladite pluralité de zones de localisation pour des segments de lignes parallèles respectifs se prolongeant dans une pluralité de directions pour obtenir une indication de l'orientation d'une image de symbole de code à barres située à l'intérieur de l'une quelconque desdites zones de localisation.

15. Lecteur de code à barres selon la Revendication 13 ou 14 dans lequel une image de code à barres se prolonge sur une pluralité de zones de localisation (Fig. 10), et comprenant en outre un moyen (38) pour déterminer sur quelles zones s'étend ledit code à barres et la concaténation d'une séquence de ces zones pour obtenir le code à barres complet à décoder (Fig. 10).

16. Lecteur de codes à barres selon la revendication 12 dans lequel ledit moyen de comparaison est programmé pour comparer les points sus-mentionnés sur des segments de lignes parallèles respectifs se prolongeant dans une pluralité de directions (Fig. 5A) pour obtenir une indication de l'orientation d'une image de symbole de code à barres localisée.

17. Lecteur de code à barres selon l'une quelconque des Revendications 12 - 16 dans lequel le moyen de comparaison (34) est programmé pour comparer les points sus-mentionnés pour deux segments de lignes parallèles par les étapes suivantes :
approximation (60) d'un dérivé d'un premier desdits segments de lignes parallèles;
approximation (60) d'un dérivé d'un deuxième desdits segments de lignes parallèles;
multiplication (62) dudit dérivé dudit premier segment de ligne et dudit dérivé dudit deuxième segment de ligne pour obtenir un produit dudit dérivé de ladite première ligne d'exploration et dudit dérivé de ladite deuxième ligne d'exploration; et
accumulation (64) de la somme des produits respectifs dudit dérivé dudit premier segment de ligne et dudit dérivé dudit deuxième segment de ligne pour fournir une note de localisation (68) pour ladite zone à travers laquelle se prolongent lesdits segments de lignes, où ladite note de localisation représente la probabilité relative que ladite zone contienne une image de symbole de code à barres.

18. Lecteur de code à barres selon la Revendication 12 ou 13, dans lequel ledit moyen de traitement (34) comprend en outre un moyen (16) pour examiner une zone dans laquelle est contenue une image de symbole de code à barres pour déterminer l'orientation de cette image de symbole de code à barres.

19. Lecteur de code à barres selon la Revendication 14 ou 15, comprenant en outre un moyen (18) programmé pour assurer l'orientation d'une image de symbole de code à barres, par les étapes de :
interpolation (90) d'un premier de deux segments de lignes parallèles;
interpolation (90) d'un deuxième de deux segments de lignes parallèles;
calcul (92) d'une fonction d'intercorrélation desdites données de premier segment de ligne interpolé et desdites données de deuxième segment de ligne interpolé; et
détection d'une crête de ladite fonction d'intercorrélation desdites données de premier et deuxième segments de lignes interpolés, où la position de ladite crête de ladite fonction d'intercorrélation desdites données de premier et deuxième segments de lignes interpolés correspond à l'orientation de ladite image de symbole de code à barres.

20. Lecteur de code à barres selon la Revendication 15, dans lequel ledit moyen pour effectuer une détermination précise d'une image de symbole de code à barres est en outre programmé pour :
décaler (94) lesdites données de deuxième segment de ligne interpolé de manière à les aligner avec lesdites données de premier segment de ligne interpolé conformément avec ladite crête détectée de ladite fonction d'intercorrélation desdites données des premier et deuxième segments de lignes interpolés.

21. Lecteur de code à barres selon l'une quelconque des Revendications 14 à 20 comprenant en outre un moyen (20) pour filtrer une image de symbole de code à barres localisée le long d'un axe essentiellement perpendiculaire à l'orientation de ladite image de symbole de code à barres et antérieur au décodage de ladite image de symbole de code à barres.

22. Lecteur de code à barres selon l'une quelconque des Revendications 14 à 21 dans lequel le moyen de traitement et de décodage (38, 23) est utilisable pour décoder une image de symbole de code à barres localisée par exploration (22) de l'image de symbole de code à barres localisée dans une direction qui est essentiellement celle de l'orientation de l'image de symbole de code à barres.
